# EUROPEAN PATENT APPLICATION

(11) **EP 4 425 891 A1**
(43) Date of publication of application: **04.09.2024**
(21) Application number: 22897408.5
(22) Date of filing: 10.10.2022
(51) Int. Cl.: H04L 67/1061

(54) **VERSION UPGRADE METHOD AND APPARATUS**

(30) Priority: 23.11.2021 CN 202111395294; 09.03.2022 CN 202210226336
(71) Applicant: Huawei Cloud Computing Technologies Co., Ltd., Guizhou 550025 (CN)
(72) Inventor: DING, Yi, Guizhou 550025 (CN); YANG, Zengyin, Guizhou 550025 (CN); YUAN, Jie, Guizhou 550025 (CN)
(74) Representative: Körber, Martin Hans
(86) International application number: PCT/CN2022/124339
(87) International publication number: WO 2023/093323

(57) **Abstract**

A version upgrade method and apparatus are provided. In the upgrade method, a user may select, on a client, a to-be-upgraded service cluster, a target version, and an upgrade manner, and then a computing node upgrades, based on the upgrade manner selected by the user, the to-be-upgraded service cluster to the target version. In this method, there is no need to create a new service cluster, and an entire upgrade process is a change performed on a same service cluster, so that availability of the service cluster can be ensured, and user experience can be improved. In addition, in the upgrade manner, the service cluster upgrade process is divided into a plurality of phases, and version baselines for scale-out and scale-in in the plurality of phases are controlled. In this way, a newly changed node in the upgrade process is stable and reliable, and a capability of the service cluster to provide a service externally is not affected.

## Description

### CROSS-REFERENCE TO RELATED APPLICATIONS

This application claims priorities to Chinese Patent Application No. 202111395294.9, filed with the China National Intellectual Property Administration on November 23, 2021 and entitled "DATA PROCESSING METHOD AND COMPUTER", and to Chinese Patent Application No. 202210226336.4, filed with the China National Intellectual Property Administration on March 9, 2022 and entitled " VERSION UPGRADE METHOD AND APPARATUS", both of which are incorporated herein by reference in their entireties.

### TECHNICAL FIELD

This application relates to the field of internet technologies, and in particular, to a version upgrade method and apparatus.

### BACKGROUND

A service cluster is a cluster formed by deploying a plurality of service instances together. As service traffic of the service cluster continuously increases and changes, the service cluster needs to be upgraded, that is, the plurality of service instances included in the service cluster need to be upgraded. In addition, scale-out and scale-in operations may be performed due to a traffic change in a service cluster upgrade process.

Currently, common cluster upgrade methods are as follows:
Method 1: When a service cluster is upgraded, once an upgrade procedure is triggered, scale-out and scale-in operations cannot be performed in an upgrade process. When traffic of the service cluster increases sharply, the service cluster may receive excessive requests and cannot respond in a timely manner. As a result, a capability of the service cluster to provide a service externally is affected, that is, this solution cannot ensure high availability of the service cluster, and user experience is affected.
Method 2: When an upgrade procedure is performed on a service cluster in an original version, a service cluster in a new target version may be created, and then traffic of the original version is diverted to the service cluster in the new target version. In addition, the target version and service cluster need to be specified when scale-out and scale-in operations are performed. In this manner, the service cluster changes, and user experience is affected. In addition, operation and maintenance personnel need to be aware of the changed service cluster and version, resulting in an increase in operation and maintenance costs.

Therefore, how to ensure reliability and availability of the service cluster when the service cluster is upgraded is a problem to be resolved.

### SUMMARY

This application provides a version upgrade method and apparatus, to improve reliability and availability in a service cluster upgrade process.

According to a first aspect, this application provides a version upgrade method. The method includes: first, receiving an upgrade request message sent by a client, where the upgrade request message includes an identifier of a service cluster and an identifier of a target version; then, obtaining a version baseline of the service cluster based on the identifier of the service cluster, where the version baseline of the service cluster indicates a software version running on a node added to the current service cluster in scale-out; adding a first node to the service cluster in the scale-out, and determining, based on the version baseline of the service cluster, a software version running on the first node; and when it is determined that the software version running on the first node is different from the target version, upgrading the first node, so that a software version running on an upgraded first node is the target version.

According to the foregoing technical solution, the software version running on the node added to the service cluster in scale-out may be determined based on the version baseline of the service cluster, and when the software version running on the added node in scale-out is different from the target version, the added node in scale-out is upgraded. This upgrade process is a change performed on a same service cluster, and there is no need to create a new service cluster, so that availability of the service cluster can be ensured, and user experience can be improved.

In a possible design, the upgrading the first node includes:
creating the upgraded first node for the first node; and switching traffic on the first node to the upgraded first node.

According to the foregoing technical solution, a corresponding upgraded node may be created for a changed node, and then traffic is diverted between a node in a historical version and a node in a target version, so that traffic on the node in the historical version is switched to the node in the target version. This implements node upgrade.

In a possible design, after the receiving an upgrade request message sent by a client, the method further includes:
upgrading a second node in the first service cluster, so that a software version running on an upgraded second node is the target version, where the second node is a node included in the service cluster before the scale-out.

According to the foregoing technical solution, the original node included in the service cluster before the scale-out may be upgraded, so that the software version of the original node is upgraded to the target version.

In a possible design, the method further includes: when it is determined that a node upgrade rate of the service cluster reaches a preset indicator, updating the version baseline of the service cluster, so that the version baseline of the service cluster indicates that a software version running on a node added to the current service cluster in the scale-out is the target version.

According to the foregoing technical solution, the version baseline of the service cluster may be updated, so that subsequent upgrade is performed based on the updated version baseline. This ensures that the version running on the node that is newly changed subsequently is the updated target version.

In a possible design, the upgrade request message further includes an upgrade manner, the upgrade manner indicates to upgrade nodes in the service cluster in a plurality of batches, and the nodes in the first service cluster include the first node and the second node.

According to the foregoing technical solution, the nodes in the service cluster may be upgraded in batches. This ensures reliability of an upgrade procedure in each batch, and improves reliability of the service cluster upgrade.

In a possible design, before the updating the version baseline of the service cluster, the method further includes: completing gray verification of software on an upgraded node in at least one batch.

According to the foregoing technical solution, gray verification may be performed on the software on the upgraded node, to ensure that traffic of a new version of the service cluster is normal, and further ensure stability of the service cluster after the version baseline is updated.

In a possible design, after the upgrading the first node, the method further includes: receiving a rollback request message sent by the client, where the rollback request message includes the identifier of the service cluster and an identifier of a historical version; and rolling back the upgraded first node, so that a software version running on the rolled back first node is the historical version, where the historical version is the software version running on the first node when the first node is added in the scale-out.

According to the foregoing technical solution, rollback may be performed on the upgraded node, so that the software version running on the node is rolled back to the historical version. This facilitates performing subsequent upgrade again.

In a possible design, the rolling back the upgraded first node includes: switching traffic on the upgraded first node to the first node.

In a possible design, the preset indicator is set by a user

According to the foregoing technical solution, the user may set the node upgrade rate of the service cluster, so that a computing node can update the version baseline based on the node upgrade rate set by the user, improving user experience.

According to a second aspect, this application further provides a version upgrade apparatus. The apparatus includes: a receiving unit, configured to receive an upgrade request message sent by a client, where the upgrade request message includes an identifier of a service cluster and an identifier of a target version; an obtaining unit, configured to obtain a version baseline of the service cluster based on the identifier of the service cluster, where the version baseline of the service cluster indicates a software version running on a node added to the current service cluster in scale-out; a determining unit, configured to: add a first node to the service cluster in the scale-out, and determine, based on the version baseline of the service cluster, a software version running on the first node; and an upgrade unit, configured to: when it is determined that the software version running on the first node is different from the target version, upgrade the first node, so that a software version running on an upgraded first node is the target version.

In a possible design, the upgrade unit is specifically configured to upgrade the first node in the following manner:
creating the upgraded first node for the first node; and
switching traffic on the first node to the upgraded first node.

In a possible design, the upgrade unit is further configured to: after the upgrade request message sent by the client is received, upgrade a second node in the first service cluster, so that a software version running on an upgraded second node is the target version, where the second node is a node included in the service cluster before the scale-out.

In a possible design, the apparatus further includes an update unit, configured to: when it is determined that a node upgrade rate of the service cluster reaches a preset indicator, update the version baseline of the service cluster, so that the version baseline of the service cluster indicates that a software version running on a node added to the current service cluster in the scale-out is the target version.

In a possible design, the upgrade request message further includes an upgrade manner, the upgrade manner indicates to upgrade nodes in the service cluster in a plurality of batches, and the nodes in the first service cluster include the first node and the second node.

In a possible design, the apparatus further includes a verification unit, configured to: before the version baseline of the service cluster is updated, complete gray verification of software on an upgraded node in at least one batch.

In a possible design, the receiving unit is further configured to: after the first node is upgraded, receive a rollback request message sent by the client, where the rollback request message includes the identifier of the service cluster and an identifier of a historical version.

The apparatus further includes a rollback unit, configured to roll back the upgraded first node, so that a software version running on the rolled back first node is the historical version, where the historical version is the software version running on the first node when the first node is added in the scale-out.

In a possible design, the rollback unit is specifically configured to roll back the upgraded first node in the following manner: switching traffic on the upgraded first node to the first node.

In a possible design, the preset indicator is set by a user

According to a third aspect, this application provides a version upgrade device. The version upgrade device has a function of performing the method according to any one of the first aspect or the possible implementations of the first aspect. The function may be implemented by hardware, or may be implemented by hardware executing corresponding software.

The version upgrade device includes a memory and a processor. The memory is configured to store computer instructions, and the processor is configured to execute the computer instructions stored in the memory, so that the device performs the method according to any one of the first aspect or the possible implementations of the first aspect.

According to a fourth aspect, this application further provides a computer-readable storage medium. The storage medium stores computer instructions. When the computer instructions are executed by a computer, the computer is enabled to perform the method according to any one of the first aspect or the possible implementations of the first aspect.

According to a fifth aspect, this application further provides a computer program product. The computer program product includes computer instructions. When the computer instructions are executed by a computer, the computer is enabled to perform the method according to any one of the first aspect or the possible implementations of the first aspect.

For technical effects brought by the possible implementations of the second aspect to the fifth aspect, refer to the descriptions of the technical effects of the first aspect or the implementations of the first aspect. Details are not described again.

### BRIEF DESCRIPTION OF DRAWINGS

FIG. 1 is a schematic diagram of an application scenario according to an embodiment of this application;
FIG. 2 is a flowchart of a software upgrade method according to an embodiment of this application;
FIG. 3 is a schematic diagram of a user interface according to an embodiment of this application;
FIG. 4 is a flowchart of a rollback method according to an embodiment of this application;
FIG. 5A and FIG. 5B are a schematic diagram of a service cluster upgrade and rollback according to an embodiment of this application;
FIG. 6 is a flowchart of multi-phase upgrade according to an embodiment of this application;
FIG. 7A to FIG. 7E are schematic diagrams of statuses of a gateway instance cluster according to an embodiment of this application;
FIG. 8 is a schematic diagram of an upgrade pipeline according to an embodiment of this application;
FIG. 9A to FIG. 9B are schematic diagrams of statuses of a gateway instance cluster according to an embodiment of this application;
FIG. 10 is a schematic diagram of a rollback pipeline according to an embodiment of this application;
FIG. 11 is a schematic diagram of a structure of an apparatus according to an embodiment of this application; and
FIG. 12 is a schematic diagram of a structure of a device according to an embodiment of this application.

### DESCRIPTION OF EMBODIMENTS

The following describes implementations of embodiments in detail with reference to the accompanying drawings.

In the following, some terms of embodiments of this application are first described, to help a person skilled in the art have a better understanding.
(1) Gateway instance (gateway instance, GW) cluster: The gateway instance cluster indicates a virtual machine, physical machine, or container cluster that provides a network service. Common gateway instance cluster includes a load balancing gateway instance, a NAT gateway instance, and an enterprise router gateway instance.
(2) Stateless service (stateless service, SLS): The stateless service means a service that can respond to any service node. Services are evenly distributed to all service nodes, and detailed information about any request is stored on the service nodes. A subsequent request is not affected.

"A plurality of" in embodiments of this application indicates two or more. It should be noted that in the descriptions of embodiments of this application, the terms "first", "second", or "step 301", and "step 302" are merely intended for a purpose of description, and shall not be understood as an indication or implication of relative importance, or should not be understood as indicating or implying an order.

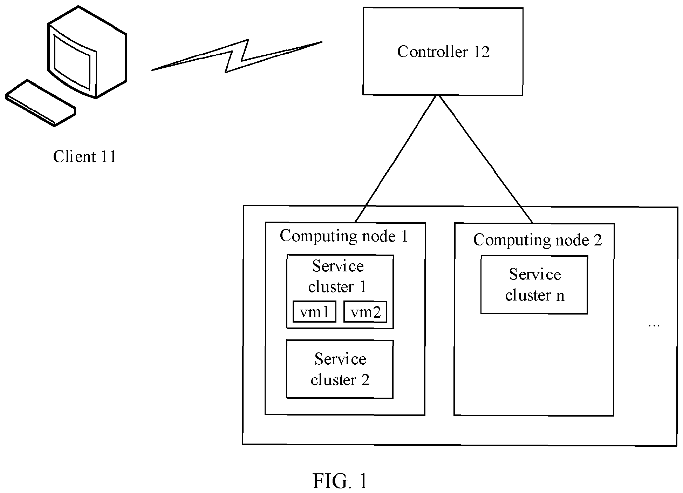

FIG. 1 is a schematic diagram of an application scenario according to an embodiment of this application. Refer to FIG. 1. The application scenario may include a client 11 and a controller 12 (which may also be denoted as a management node). The controller 12 may manage a plurality of computing nodes (for example, a computing node 1 and a computing node 2 shown in the figure) and nodes included in the computing nodes. One or more service clusters may be deployed on each computing node. For example, the computing node 1 may include a service cluster 1 and a service cluster 2. The service cluster 1 may include at least one virtual node, for example, a virtual machine (virtual machine, VM). For example, the service cluster 1 may include vm1 (a node 1) and vm2 (a node 2). It should be understood that FIG. 1 is merely an example. In actual application, more computing nodes, service clusters, nodes, and the like may be further included. This is not limited herein.

In some embodiments, when version upgrade needs to be performed on a node in a service cluster, a user may select, on an operation interface displayed on the client 11, a to-be-upgraded service cluster, a target version, and an upgrade manner (which may also be referred to as an upgrade policy). Then, the client 11 may send an upgrade request message to the controller 12. The upgrade request message may include an identifier of the to-be-upgraded service cluster, an identifier of the target version, and the upgrade manner. After receiving the upgrade request message, the controller 12 may upgrade the to-be-upgraded service cluster to the target version in the upgrade manner selected by the user.

In a possible implementation, in a service cluster upgrade process, an upgrade deployment pipeline may be displayed on the client 11, so that the user can view an upgrade progress in a timely manner, improving user experience.

In some embodiments, in the upgrade process, scale-out and scale-in may be performed on the service cluster due to a traffic change. For example, two nodes, namely, a node 3 and a node 4, are added in scale-out in a phase in which a version baseline is a historical version (which may also be denoted as an original version or an old version), and two nodes, for example, a node 5 and a node 6, are added in scale-out in a phase in which the version baseline is the target version. It should be understood that the target version is a version obtained by upgrading the service cluster. In the upgrade process, to-be-upgraded nodes in the service cluster 1, namely, the node 1 and the node 2, may be counted first, and then the node 1 and the node 2 are upgraded first. If scale-out occurs in this process, when next upgrade starts, to-be-upgraded nodes in the service cluster 1, namely, the node 3 and the node 4, may be recounted, and then the node 3 and the node 4 are upgraded.

In addition, in this embodiment of this application, a version of a scaled node can be controlled by controlling a version baseline for scale-out and scale-in. For example, before the version baseline for the scale-out and scale-in is adjusted, versions of the node 3 and the node 4 are the historical version, and the node 5 and the node 6 are added in scale-out after the version baseline for the scale-out and scale-in is adjusted. Therefore, versions of the node 5 and the node 6 are the target version (which may also be denoted as new versions), and the nodes do not need to be updated.

In some other embodiments, if it is found in the upgrade process that a traffic problem occurs in the service cluster, an upgrade failure occurs, or the like, a rollback procedure may be triggered, that is, a service cluster to be rolled back is rolled back to a historical version.

The following describes in detail a version upgrade method provided in an embodiment of this application.

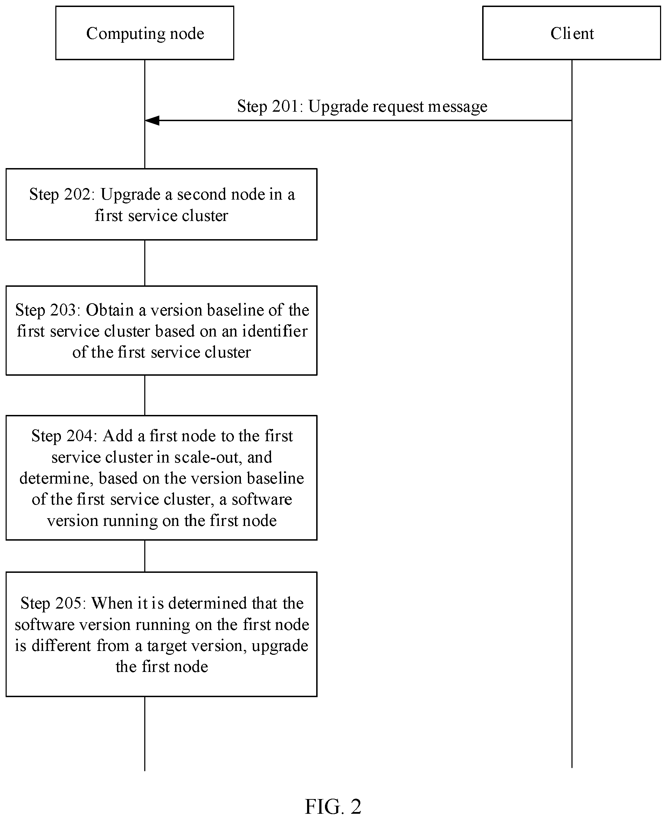

FIG. 2 is a flowchart of a version upgrade method according to an embodiment of this application. As shown in FIG. 2, the method may include the following steps.

Step 201: A computing node receives an upgrade request message sent by a client.

It should be understood that the computing node in the following embodiment may be understood as a controller in the scenario shown in FIG. 1.

The upgrade request message includes an identifier of a to-be-upgraded service cluster (the to-be-upgraded service cluster is denoted as a "first service cluster" below), an identifier of a target version, and an upgrade manner.

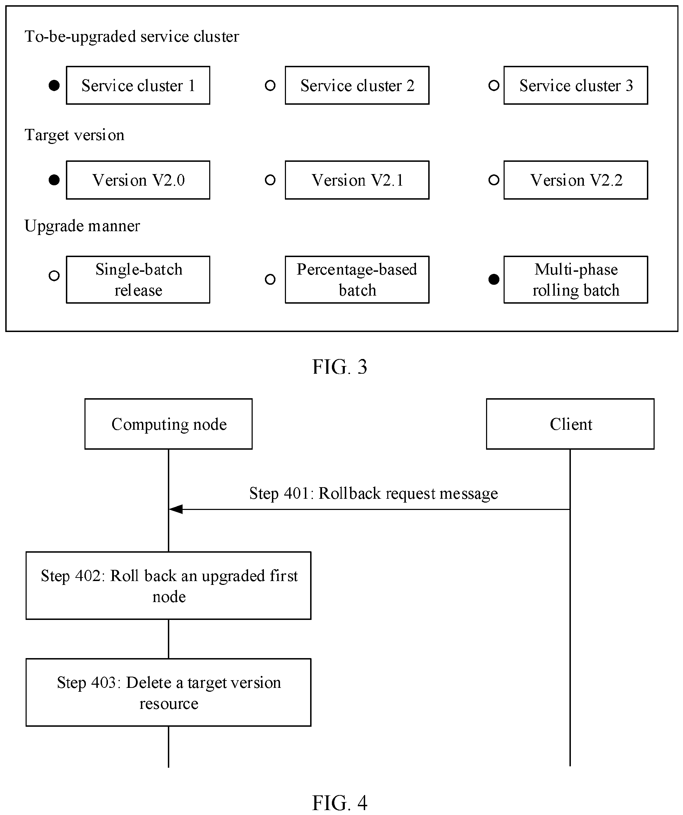

In a possible implementation, the client may display an operation interface. For example, as shown in FIG. 3, a user may select, on the interface, the first service cluster (for example, the first service cluster is a service cluster 1 in a computing node 1, and the service cluster 1 may include a node 1 and a node 2), the target version (for example, a version V2.0), and the upgrade manner (which may also be referred to as an upgrade policy, for example, a multi-phase rolling batch-wise upgrade manner). Certainly, the node 1 and the node 2 may alternatively be nodes in a same service cluster, and there may be one to-be-upgraded service cluster. For example, only the service cluster 1 is selected. This is not limited in this application. In this embodiment of this application, there may be at least one to-be-upgraded service cluster, that is, the user may choose to upgrade the at least one service cluster.

It should be understood that FIG. 3 is merely an example for description. In actual product implementation, the interface may include more or fewer controls such as a selection box. This is not limited in this application.

Optionally, when the user chooses to upgrade a plurality of service clusters, a same target version may be selected, or different target versions may be selected. This is not limited herein.

It should be understood that single-batch release in the upgrade manner may be understood as synchronously upgrading to-be-upgraded nodes in the service cluster; and percentage-based batch release may be understood as upgrading m% first and then upgrading n%. Both m and n are integers greater than 0. The multi-phase rolling batch-wise upgrade manner may be understood as rolling upgrade of the service cluster in batches in a plurality of phases. For example, some nodes in the service cluster are first upgraded in a first batch in a first phase, and then some other nodes in the service cluster are upgraded in a second batch in the first phase. Certainly, the node 1 in the service cluster 1 may be upgraded in a first batch in a first phase, and then the node 2 is upgraded in a second batch in the first phase. If scale-out occurs and a node is newly added in an upgrade process in the first phase, a version of the newly added node is a historical version (namely, a version corresponding to the current service cluster). In this case, the newly added node can be upgraded in the second phase.

It should be noted that an upgrade manner used in the version upgrade method described in the following embodiment of this application is the multi-phase rolling batch-wise upgrade manner.

Step 202: The computing node upgrades a second node in the first service cluster.

For ease of description, in this embodiment of this application, a node that is newly added to the to-be-upgraded service cluster due to scale-out and scale-in in the upgrade process may be denoted as a "first node" (for example, a node 3 and a node 4 in the following), and at least one original node included in the to-be-upgraded service cluster, namely, a node included in the service cluster before the scale-out and scale-in, is denoted as a "second node" (for example, the node 1 and the node 2).

Versions of different nodes in the service cluster may be the same or different. When the versions of the different nodes are the same, if the service cluster is upgraded, it is equivalent to upgrading all nodes in the service cluster, that is, all the nodes included in the service cluster are to-be-upgraded nodes.

Optionally, when the versions of the different nodes are different, versions of some nodes may be the target version. In this case, when the user chooses to upgrade the service cluster to the target version, a node whose version is the target version in the service cluster may be ignored by default, that is, to-be-upgraded nodes are some nodes in the service cluster. Certainly, in this case, all the nodes included in the service cluster may alternatively be used as to-be-upgraded nodes, and then only a node whose version is not the target version is upgraded during the upgrade, and a node whose version is the target version is not processed. It should be understood that versions of nodes included in an upgraded service cluster are the same.

In some embodiments, the computing node may divide the to-be-upgraded nodes included in the to-be-upgraded service cluster into at least one batch, and then upgrade the to-be-upgraded nodes in batches. For example, it is assumed that the to-be-upgraded service cluster is the first service cluster, the to-be-upgraded nodes included in the first service cluster are the node 1 and the node 2, and the computing node may create target version resources corresponding to the two nodes (namely, target version resources). Then, the computing node may upgrade the node 1 in the first batch. For example, an upgraded node 1 is denoted as a node 1'. Then, the computing node may upgrade the node 2 in the second batch. For example, an upgraded node is denoted as a node 2'. Versions of the node 1 and the node 2 before upgrade are the historical version. After the node 1 and the node 2 are upgraded, versions of the node 1' and the node 2' are the target version. It should be understood that, in this case, the first service cluster may be a service cluster consisting of the node 1' and the node 2'.

Optionally, if the scale-out occurs in a process of performing step 202, the first service cluster may include a node that is upgraded to the target version and a node that is changed after the scale-out in the service cluster For example, if the node 3 and the node 4 are newly added, the first service cluster may be a service cluster consisting of the node 1', the node 2', the node 3, and the node 4.

Step 203: The computing node obtains a version baseline of the first service cluster based on the identifier of the first service cluster.

In some embodiments, the computing node may obtain the version baseline of the service cluster based on the identifier of the service cluster, to determine, based on the version baseline of the service cluster, a software version running on a node changed in the upgrade process. In other words, the version baseline of the service cluster indicates the software version running on the node added to the current service cluster in the scale-out.

Step 204: Add the first node to the first service cluster in the scale-out, and determine, based on the version baseline of the first service cluster, a software version running on the first node.

In the service cluster upgrade process, the scale-out may occur In this case, the second node in the service cluster may be upgraded first, and then the first node (which may also be referred to as the changed node) in the service cluster after the scale-out is upgraded. In this case, the original node and the changed node may be upgraded in phases, to ensure that a historical version resource exists on each of the original node and the changed node. Therefore, long traffic recovery time caused when the historical version resource is re-created during rollback due to a subsequent problem is avoided. For example, the upgrade process in step 203 may be denoted as the upgrade process in the first phase, and an upgrade process in step 205 may be denoted as an upgrade process in the second phase.

For example, it is assumed that the scale-out occurs in the upgrade process in the first phase, for example, the node 3 and the node 4 are added. In this case, the first service cluster includes the node 1', the node 2', the node 3, and the node 4. In this case, software versions running on the node 3 and the node 4 may be determined based on a real-time version baseline of the first service cluster. For example, if a current version baseline is the historical version, the software versions running on the node 3 and the node 4 that are newly added in the scale-out are the historical version.

In a possible implementation, the computing node may further update the version baseline of the service cluster when it is determined that a node upgrade rate of the service cluster reaches a preset indicator. For example, the version baseline of the service cluster is updated from the historical version to the target version, so that the version baseline indicates that a software version running on a node added to the current service cluster in the scale-out is the target version.

The preset indicator may be set by the user. Nodes indicated in the node upgrade rate may include the node (namely, the original node in the foregoing embodiment) before scale-out and scale-in of the service cluster and a node whose version is the historical version after the scale-out and scale-in. For example, the preset indicator is 80%, that is, after upgrade of more than 80% nodes is completed, the version baseline of the service cluster may be updated. For example, if four first nodes and six second nodes are in the historical version, the version baseline of the service cluster may be updated after more than eight nodes in the 10 nodes are upgraded. Certainly, the preset indicator is merely an example, and this is not limited in this application. For example, the version baseline of the service cluster may be updated only after all second nodes are upgraded.

In other words, before the version baseline of the service cluster is updated, if scale-out and scale-in operations are performed, a software version running on a changed node is the historical version; or after the version baseline of the service cluster is updated, if a scale-out/scale-in operation is performed, a software version running on a changed node is the target version.

Step 205: When it is determined that the software version running on the first node is different from the target version, the computing node upgrades the first node.

In some embodiments, the computing node may alternatively divide the first node into at least one batch, and then upgrade the first node in batches. For ease of description, in this embodiment of this application, a node after upgrade of the changed node, namely, the first node, may be denoted as "upgraded first and second nodes". Specifically, when the first node is upgraded, the upgraded first node may be first created for the first node, and then traffic on the first node is switched to the upgraded first node.

For example, the first node of the current service cluster may include the node 3 and the node 4, and the computing node may prepare target version resources corresponding to the two nodes (namely, target version resources). Then, the computing node may upgrade the node 3 in the first batch. For example, an upgraded node 3 is denoted as a node 3'. Then, the computing node may upgrade the node 4 in the second batch. For example, an upgraded node is denoted as a node 4'. Versions of the node 3 and the node 4 before upgrade are the historical version. After the node 3 and the node 4 are upgraded, versions of the node 3' and the node 4' are the target version. It should be understood that, in this case, the first service cluster is a service cluster consisting of the node 1', the node 2', the node 3', and the node 4'.

Further, after step 205, the computing node may obtain all historical version resources, and delete the historical version resources, that is, replace the node in the historical version with the node in the target version.

According to the foregoing embodiment, when the scale-out and scale-in occur in the service cluster upgrade process, the computing node may upgrade the original node and the changed node in the service cluster in different phases, to improve reliability of the service cluster upgrade process.

Further, in the upgrade process or after upgrade is completed, if abnormal traffic, an upgrade failure, or the like is detected, a rollback procedure may be triggered to roll back the target version of the service cluster. The following uses an example in which the rollback procedure is performed before the version baseline of the service cluster is updated for description.

FIG. 4 is a flowchart of a rollback method according to an embodiment of this application. As shown in FIG. 4, the method may include the following steps.

Step 401: A computing node receives a rollback request message sent by a client.

The rollback request message may include an identifier of a service cluster to be rolled back, an identifier of a historical version, and a rollback manner.

In a possible implementation, the client may display an operation interface, and the user may select, on the operation interface, the service cluster to be rolled back (for example, a service cluster 1), the historical version (for example, a version V1.0), and the rollback manner (for example, a batch rollback manner).

Step 402: The computing node rolls back an upgraded first node.

In some embodiments, the computing node may roll back the upgraded first node, that is, switch traffic of the upgraded first node to a first node, so that a software version running on the rolled back first node is the historical version. The historical version is the software version running on the first node when the first node is added in the scale-out.

It should be noted that, a node to be rolled back may include a node whose version is a target version in the service cluster. For example, the service cluster includes a node 1', a node 2', a node 3', and a node 4'. The node 3' and the node 4' are upgraded first nodes, and the node 1' and the node 2' are upgraded second nodes (namely, nodes after upgrade of a second node). In this case, the node to be rolled back may include: the node 1', the node 2', the node 3', and the node 4'.

In a possible implementation, when rolling back the node to be rolled back, the computing node may roll back the node to be rolled back in different batches. For example, the node 1' may be rolled back to a node 1 whose version is the historical version in a first batch, the node 2' may be rolled back to a node 2 whose version is the historical version in a second batch, the node 3' may be rolled back to a node 3 whose version is the historical version in a third batch, and the node 4' may be rolled back to a node 4 whose version is the historical version in a fourth batch. Certainly, the node to be rolled back may alternatively be rolled back in another batch manner. For example, the node 1' and the node 2' may be rolled back in a first batch, and the node 3' and the node 4' may be rolled back in a second batch. Certainly, the rollback manner may alternatively be rolling back the node 1', the node 2', and the node 3' in a first batch, and rolling back the node 4' in a second batch, or may be rolling back the node 1', the node 2', the node 3', and the node 4' in a first batch. This is not limited in this application.

Step 403: The computing node deletes a target version resource.

After completing a rollback procedure, the computing node may obtain all nodes whose versions are target versions in the service cluster, and delete the prepared target version resource, to release the resource in a timely manner, improving utilization.

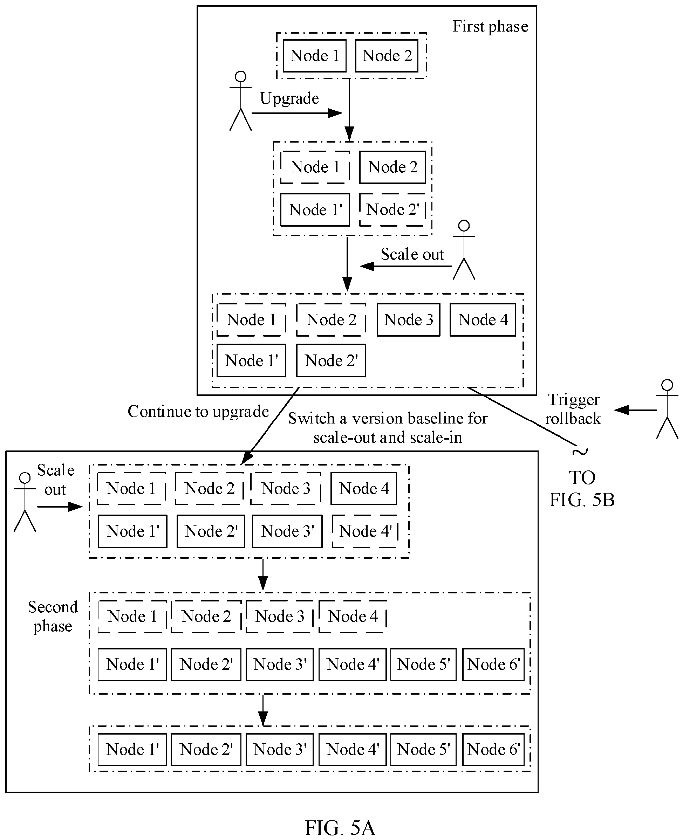

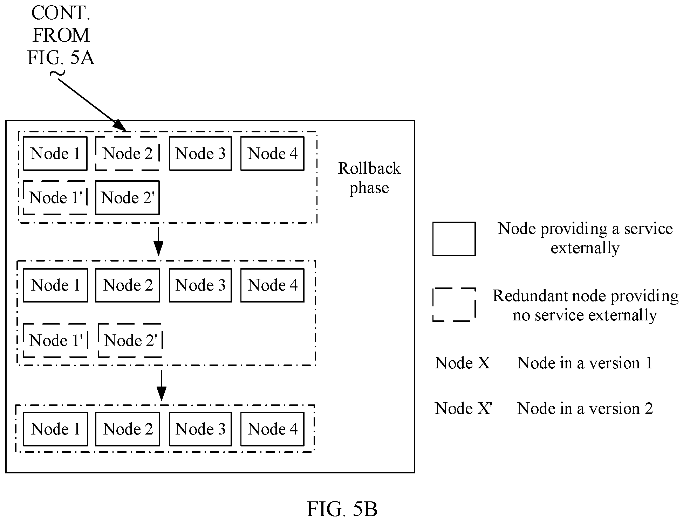

FIG. 5A and FIG. 5B are a schematic diagram of a service cluster upgrade and rollback according to an embodiment of this application. The following describes the methods in the embodiments shown in FIG. 2 and FIG. 4 with reference to FIG. 5A and FIG. 5B. In the schematic diagram shown in FIG. 5A and FIG. 5B, it is assumed that an original service cluster consists of the node 1 and the node 2, and a current version is a version 1. The node 1 is a node in an availability zone 1, and node 2 is a node in an availability zone 2. When the user triggers an upgrade deployment service, the counted to-be-upgraded nodes include the node 1 and the node 2. In an upgrade deployment process, the service cluster is scaled out twice due to a traffic surge. For example, the node 3 and the node 4 are added in the scale-out in a first phase, and a node 5' and a node 6' are added in scale-out in a second phase.

It should be noted that, in this embodiment of this application, the service cluster may be a stateless service cluster, or a stateful service cluster. This is not limited herein. It should be understood that, if the service cluster is the stateful service cluster, an upgrade policy and the like need to be preconfigured. The following uses the stateless service cluster as an example.

### I. Upgrade deployment process

1. Initial status The stateless service cluster consists of the node 1 and the node 2. The two nodes evenly carry external requests and traffic of the cluster. In this case, a version baseline for scale-out and scale-in of the service cluster is the historical version.
2. First phase of upgrade deployment

After the user triggers the upgrade deployment on a page, the computing node counts the to-be-upgraded nodes (the node 1 and the node 2) in the current service cluster, and prepares for the target version resources corresponding to the two nodes. Then, upgrade is performed based on a list of the to-be-upgraded nodes and the upgrade policy selected by the user (for example, upgrade is performed in batches based on the availability zone). Specifically, the node 1 is first upgraded in a batch (1). In this case, traffic of the service cluster is carried by the node 1' in the target version corresponding to the node 1 and the node 2 in the historical version. It is assumed that scale-out is triggered in the service cluster in an upgrade process in the batch (1), and the node 3 and the node 4 are added in the scale-out. Because upgrade is currently in the first phase, the node 3 and the node 4 that are decreased in scale-in are in the historical version. Then, upgrade is in a batch (2) in the first phase. The node 2 is upgraded in the batch (2), to obtain the node 2' in the target version. When the first phase of upgrade ends, user traffic of the service cluster is carried by the node 1' and the node 2' in the target version, and the node 3 and the node 4 in the historical version.

Optionally, in this embodiment of this application, a gray node may be set. For example, a node with a lower level (with smaller traffic) in the service cluster may be used as the gray node for gray verification, to ensure that traffic of the target version is normal.

### 3. Silent period in the first phase of upgrade deployment

In the silent period, the user can perform full validation on the traffic and a function of the service cluster by using a preconfigured script, to ensure that a version of the service cluster has no function problem after the first phase ends. In this procedure, a version of the newly added node in the scale-out is still the historical version.

4. Adjusting a version baseline for scale-out and scale-in of the service cluster to the target version, and waiting for a time period, to ensure that a change operation like scale-out and scale-in of the historical version is completed. The target version is fully verified after the first phase ends. In this case, the version baseline is adjusted to the target version, so that subsequent scale-out and scale-in operations are performed on the target version. Then, no node in the historical version exists in a subsequent to-be-upgraded node.

After the version baseline for the scale-out and scale-in of the service cluster is adjusted, the waiting time period is maintained, to ensure that a scale-out and scale-in procedure of the historical version is completed. If the scale-out and scale-in procedure of the historical version is not completed, a statistical error occurs in the to-be-upgraded nodes in a second phase (for example, a node that fails to be added in the scale-out and is rolled back is counted as the to-be-upgraded node).

In this embodiment of this application, version baselines for the scale-out and scale-in in two phases is controlled, to control a traffic direction in a gray phase. This can strictly support rolling upgrade, support rollback in seconds, and ensure high reliability of the service cluster

### 5. Second phase of upgrade deployment

It should be understood that, in this embodiment of this application, the first phase generally means all phases before the version baseline is switched, that is, the version baseline for the scale-out and scale-in is the historical version. The second phase generally means a phase after the version baseline is switched, that is, a version baseline for scale-in is the target version.

The computing node also counts the nodes (the node 1, the node 2, the node 3, and the node 4) in the current service cluster, and excludes the upgraded nodes (the node 1 and the node 2) in the first phase. In this case, the to-be-upgraded nodes (the node 3 and the node 4) are remaining nodes: the node 3 and the node 4. The target version resources corresponding to the node 3 and the node 4 are prepared for the upgrade. Then, the computing node may perform upgrade in the second phase based on the list of the to-be-upgraded nodes and the upgrade policy selected by the user (upgrade policies in the first phase and the second phase may be the same or different).

Specifically, the node 3 in the availability zone 1 may be upgraded in a batch (1) in the second phase, and the node 4 in the availability zone 2 may be upgraded in a batch (2). After upgrade in the batch (1) ends, traffic of the service cluster is carried by the node 1', the node 2', and the node 3' in the target version, and the node 4 in the historical version. It is assumed that the scale-out is triggered again in the service cluster in the upgrade process in the batch (1) in the second phase, and the node 5' and the node 6' are added in the scale-out. Because upgrade is currently in the second phase, the node 5' and the node 6' that are decreased in scale-in are in the target version. Then, upgrade is in the batch (2) in the second phase. The node 4 in the availability zone 2 is upgraded to the node 4' in the target version. After the second phase of upgrade ends, user traffic of the service cluster is carried by the node 1', the node 2', the node 3', the node 4', the node 5', and the node 6' in the target version, and only the nodes in the target version provide a service externally.

### 6. Clearing the historical version resources

After completing upgrade of the service cluster, the computing node can obtain all nodes in the historical version, trigger deletion configuration, and delete resource nodes, to ensure that resources are released in a timely manner.

In some embodiments, the user may specify an occasion for adjusting the version baseline for the scale-out and scale-in, and then the computing node adjusts the version baseline for the scale-out and scale-in when detecting that the specified occasion is met. For example, the user specifies that the version baseline can be switched at an occasion that the service cluster is upgraded at a preset ratio. The preset ratio may be a percentage of a quantity of virtual machines in a historical version in the service cluster to a total quantity of virtual machines in the entire service cluster

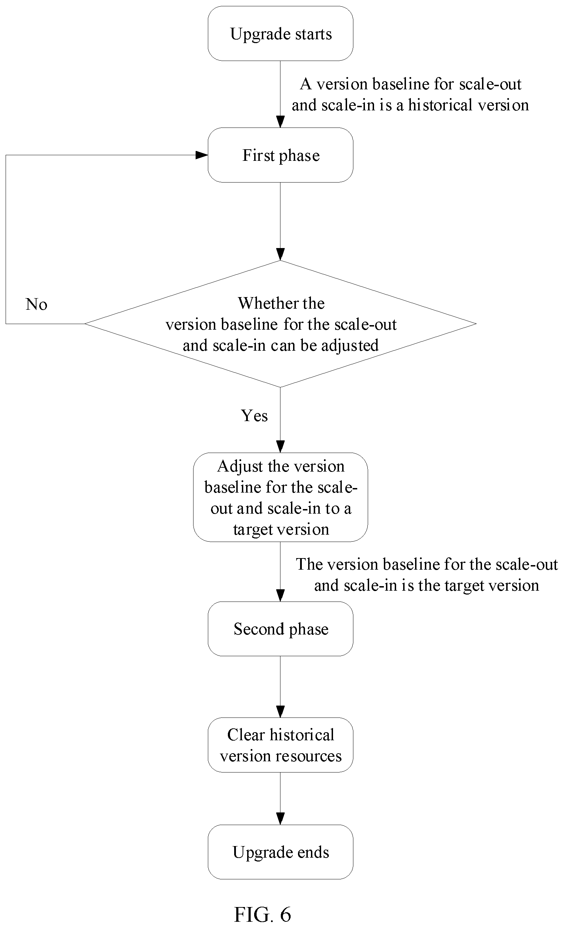

FIG. 6 is a flowchart of multi-phase upgrade according to an embodiment of this application. When an upgrade procedure starts, a version baseline for scale-out and scale-in is a historical version. In this case, upgrade can be performed in a first phase. After upgrade in the first phase is completed, whether the version baseline for the scale-out and scale-in can be adjusted is detected. If the version baseline for the scale-out and scale-in can be adjusted, the version baseline for the scale-out and scale-in is adjusted to a target version, and the process enters a second phase. If the version baseline for the scale-out and scale-in cannot be adjusted, the first phase is repeated until the version baseline for the scale-out and scale-in can be adjusted. For example, a user specifies that the version baseline for the scale-out and scale-in can be adjusted when upgrade is 50% completed. Assuming that the service cluster includes 50 nodes before upgrade in the first phase starts, the version baseline for the scale-out and scale-in can be adjusted only when 25 nodes are upgraded. However, if 50 nodes are added in the scale-out in an upgrade process in the first phase, the version baseline for the scale-out and scale-in can be adjusted only when 50 nodes are upgraded. In this case, if the 25 nodes are upgraded before the scale-out, upgrade in the first phase needs to be performed repeatedly, other 25 nodes need to be upgraded, and then the version baseline for the scale-out and scale-in can be adjusted.

In other words, the upgrade procedure may be performed a plurality of times before and after the version baseline for the scale-out and scale-in is adjusted, or it may be understood that the upgrade procedure may be performed in a plurality of phases before and after the version baseline for the scale-out and scale-in is adjusted.

### II. Rollback deployment process

The following uses an example in which rollback is triggered after upgrade in the first phase is completed.

Assuming that a problem occurs in the cluster traffic in the silent period after the upgrade procedure in the first phase is completed, the user can trigger a rollback procedure. In this case, the service cluster consists of the node 1' in the target version in the availability zone 1, the node 2' in the target version in the availability zone 2, the node 3 in the historical version in the availability zone 1, and the node 4 in the historical version in the availability zone 2, and the version baseline for the scale-out and scale-in is the historical version.

The rollback deployment process mainly includes the following phases:
1. Initial status
   The stateless service cluster consists of the node 1' and the node 2' in the target version and the node 3 and the node 4 in the historical version. The four nodes evenly carry external requests and traffic of the cluster. In this case, the version baseline for the scale-out and scale-in of the service cluster is the historical version.
2. Adjusting the version baseline for the scale-out and scale-in of the service cluster to the historical version
   It should be understood that, if rollback is triggered after the first phase, the version baseline for the scale-out and scale-in of the service cluster is adjusted to the target version, that is, the version baseline for the scale-out and scale-in of the service cluster is still the historical version. Therefore, this step may not be performed, or no substantial change occurs after this step is performed. If rollback is triggered after the version baseline for the scale-out and scale-in is adjusted, the computing node can adjust the version baseline for the scale-out and scale-in of the service cluster to the historical version and wait for a time period, to ensure that the scale-out and scale-in operations of the target version are completed.
3. Rollback deployment phase
   After rollback deployment is triggered on the page, the user can enter the rollback deployment phase. The computing node may first count the nodes (the node 1', the node 2', the node 3, and the node 4) in the current service cluster. Because the node 3 and the node 4 are in the historical version and do not need to be upgraded, historical version resources corresponding to the two nodes, namely, the node 1' and the node 2', are prepared. Then, the rollback procedure is performed based on the rollback policy selected by the user in the list of nodes to be rolled back. Specifically, in the batch (1), traffic of the node 1' in the availability zone 1 may be diverted back to the node 1 in the historical version. In this case, user traffic of the service cluster is carried by the node 1 in the historical version corresponding to the node 1', the node 2' in the target version, and the node 3 and the node 4 in the historical version that are newly added in the scale-out. Traffic of node 2' in the availability zone 2 is diverted back to the node 2 in the batch (2). When the rollback procedure ends, user traffic of the service cluster is carried by the node 1 and the node 2 in the historical version, and the node 3 and the node 4 in the historical version that are newly added in the scale-out. All traffic is carried by nodes in the historical version.
4. Clearing target version resources

After completing rollback, the computing node obtains all nodes in the target version, triggers deletion configuration, and deletes the resource nodes, to ensure that the resources can be released in a timely manner.

The following uses a gateway instance as an example to describe a version upgrade method and a rollback method in embodiments of this application.

In some embodiments, the user may create a gateway instance (namely, the service cluster) by using a front-end page of a gateway. A bearing tenant (a gateway service tenant) may apply for a corresponding quantity of virtual machines with capabilities in the target version from an NGP service, create a subinterface for traffic diversion on the virtual machine, and deliver router configuration to the virtual machine resource, to implement traffic diversion. After the gateway instance goes online for service for a time period, the user can upgrade a version of an instance virtual machine and perform image upgrade. Specifically, the target version is registered on an NGP service platform, an upgrade page is logged in, the target version, a to-be-upgraded instance cluster, and time of the silent period are selected on the upgrade page, and then the upgrade procedure is triggered, to generate an upgrade pipeline.

### (1) Upgrade Process

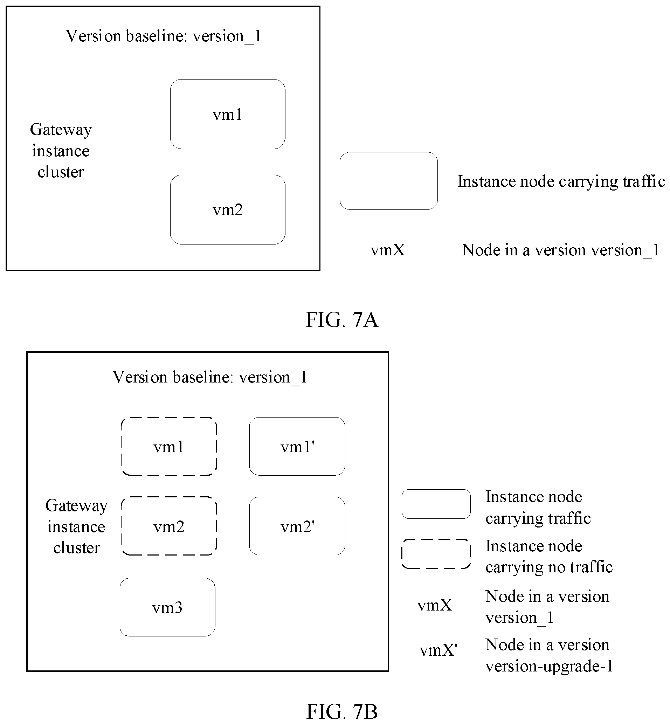

As shown in FIG. 7A, it is assumed that an initial gateway instance cluster includes two virtual machines, for example, vm1 and vm2, versions of vm1 and vm2 are version_1, and a version baseline for scale-out and scale-in of a current service cluster is version_1. As service traffic of the gateway cluster keeps increasing and changing, a gateway service adapts and releases a new version (for example, a target version is version-upgrade-1). A plurality of components in the target version are updated, and image upgrade needs to be performed. Specifically, an upgrade deployment procedure may include the following steps.

Step 1: A user selects the target version and a to-be-upgraded gateway cluster on an upgrade page. For example, if the target version is version-upgrade-1, and an ID of the to-be-upgraded gateway cluster is gw_instance_1, optionally, in this step, the user may alternatively select time of a silent period, or the like. This is not limited in this application.

Step 2: Select an upgrade policy.

The upgrade policy in this embodiment of this application may support a plurality of batch scenarios, for example, an instance tenant level (there may be different levels of tenants in a shared service instance cluster), an availability zone in which an instance virtual machine is located (a computing node on which the virtual machine is located), a fault domain in which the instance virtual machine is located, and the instance virtual machine.

Step 3: Enter a first phase of the upgrade procedure.
A. Obtain all to-be-upgraded virtual machines (namely, vm1 and vm2) and prepare for upgrade. vm1 prepares vm1' in the target version (version-upgrade-1), and vm2 prepares vm2' in the target version (version-upgrade-1).
B. Upgrade a virtual machine in a batch (1) based on a batch policy. Specifically, health status check is first performed on target vm1' (a heartbeat is reported by using an internal agent of the virtual machine), and upgrade is performed on a premise that a health status of the target virtual machine is normal. Then, traffic of vm1 is diverted to vm1' in the target version in the batch (1). Then, an offline operation is performed on traffic of vm1 in old version. In an offline process, only the offline operation is performed, and diversion configuration of an er service, a subinterface on the virtual machine, and a virtual machine resource are not deleted. This ensures that traffic diversion can be performed in seconds during rollback, and performs rollback in seconds.

A traffic diversion process includes: adding the target virtual machine to an instance, creating a subinterface on the virtual machine, notifying traffic diversion configuration of the er service, and diverting traffic to the target virtual machine.

C. Traffic gray verification in the batch (1) After virtual machine upgrade is completed in the batch (1), verification can be performed on traffic reachability related to a gateway instance can be verified to ensure that traffic of the service cluster is normal, that is, traffic of the target version is normal.

D. Perform upgrade in a batch (2) based on the batch policy. This process is the same as an execution process of the batch (1), except that an upgrade object is changed to vm2. For details, refer to the upgrade process of vm1 in the batch (1). Details are not described herein again.

E. Silent period in the first phase. After all counted to-be-upgraded nodes are upgraded, the procedure enters the silent period (time of the silent period can be set by the user on the page). Traffic and a function of the virtual machine in the target version are observed based on a test case set by the gateway service or traffic indicator detection, to ensure that the target version has no quality problem.

It should be understood that step C and step E are optional steps, and may or may not be performed in this embodiment of this application.

F. A scale-out operation occurs. For example, vm3 is added to the gateway service cluster in the scale-out. In this case, for a status of the gateway service cluster after upgrade in the first phase is completed, refer to FIG. 7B.

Step 4: Adjust the version baseline for the scale-out and scale-in of the gateway instance cluster to the target version (version-upgrade-1).

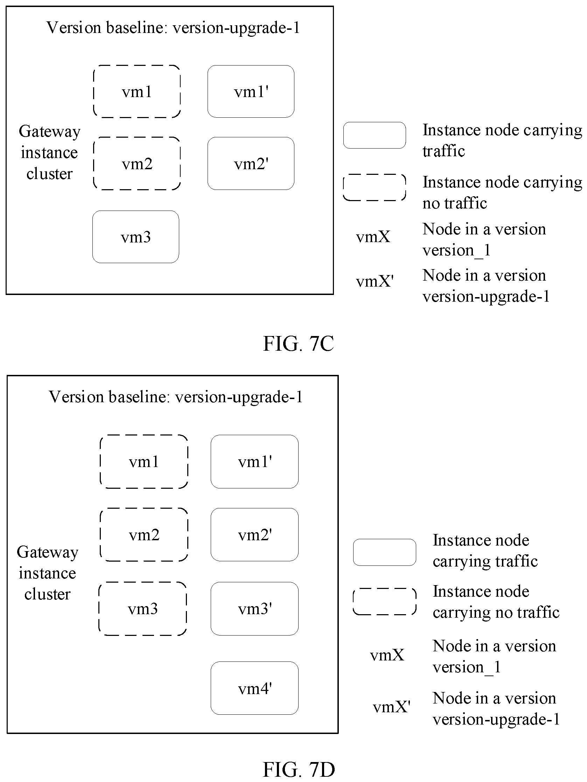

After the silent period in the first phase ends, the function of the target version (version-upgrade-1) can be ensured to be normal. In this case, the version baseline for the scale-out and scale-in of the gateway service cluster can be adjusted to the target version (version-upgrade-1), and a waiting time period is maintained, to ensure that a scale-out and scale-in task of the old version (version_1) is completed. In this case, the gateway instance cluster of which the version baseline for the scale-out and scale-in is adjusted is shown in FIG. 7C. In the gateway service cluster, traffic is carried by vml', vm2', and vm3.

Step 5: Enter a second phase of the upgrade procedure.
A. Recount the to-be-upgraded virtual machine (vm3) in the historical version (version_1) and prepare for upgrade, that is, vm3 prepares vm3' in the target version (version-upgrade-1).
B. Upgrade the virtual machine in the batch (1) based on the batch policy (there is only one to-be-upgraded virtual machine, that is, there is only one batch). For a specific implementation of this step, refer to the upgrade process of vm1 in the first phase. Details are not described herein again.
C. A scale-out operation is performed in an execution process of this step. For example, vm4' is added to the service cluster in the scale-out. The version baseline for the scale-out and scale-in is adjusted. Therefore, vm4' is added in the scale-out by using version-upgrade-1 as the version baseline. A current status of the gateway instance cluster is shown in FIG. 7D.

Step 6: Clear the virtual machines in the historical version (version_1).

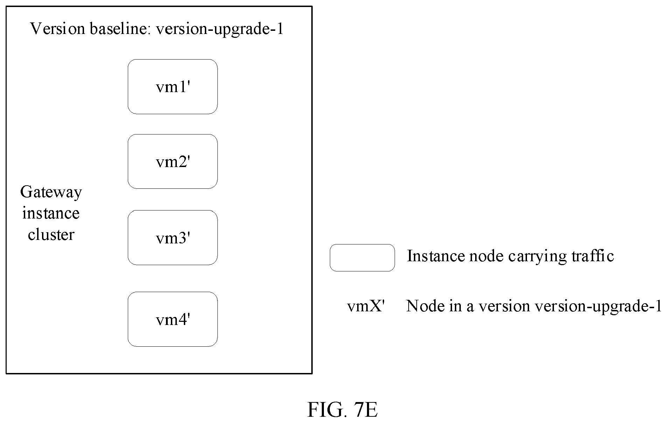

After the second phase is completed, all to-be-upgraded virtual machines in the old version (version_1) are upgraded, and the newly added virtual machine in the scale-out is upgraded to the target version (version-upgrade-1). After upgrade is completed, all the virtual machines in the old version (version_1) are cleared, to release resources. In this case, for the status of the gateway instance cluster that completes the upgrade procedure, refer to FIG. 7E.

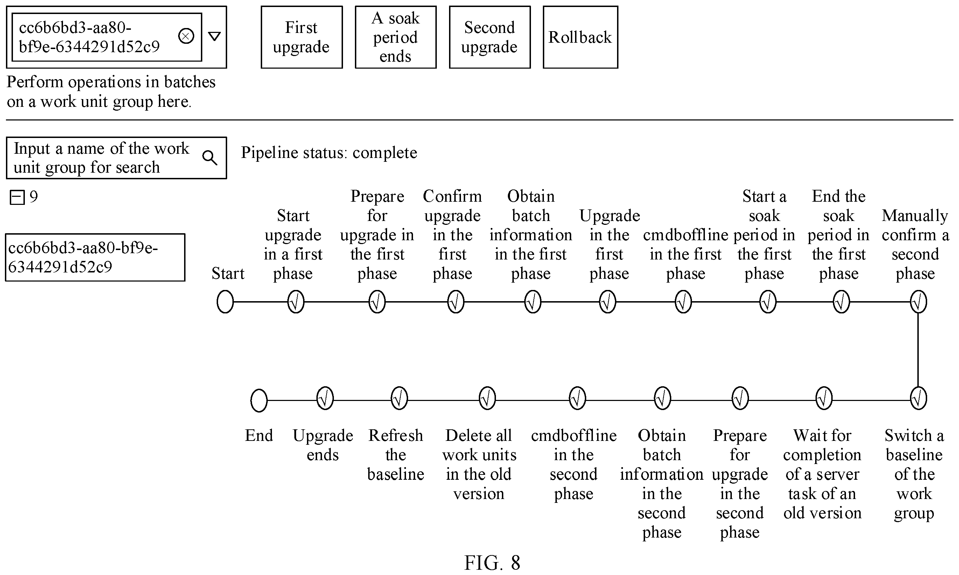

In a possible implementation, an upgrade pipeline may be displayed on the upgrade page. For example, as shown in FIG. 8, when each step on the pipeline is completed or fails, corresponding prompt information is displayed. For example, if execution is completed, a tick V is displayed; if execution fails, an error × is displayed.

### (2) Rollback Process

Step 1: Adjust the version baseline for the scale-out and scale-in of the gateway instance cluster to the target version (version_1).

If a problem occurs in the target version (version-upgrade-1) of upgrade deployment, the traffic needs to be switched back to the virtual machines in the old version (version_1), to restore a function of the gateway cluster. In this case, to prevent the target version from further spreading (to prevent a new virtual machine in the target version from being added to the gateway instance cluster in the scale-out to carry the traffic), the version baseline for the scale-out and scale-in of the gateway cluster needs to be immediately adjusted to the original version (version_1), to ensure that all subsequent scale-out and scale-in operations are performed on the historical version. A waiting time period is maintained, to ensure that a scale-out and scale-in task of the target version (version-upgrade-1) is completed.

It is assumed that rollback is triggered in the status of the gateway service cluster shown in FIG. 7C. For the gateway instance cluster whose version baseline for scale-out and scale-in is adjusted, refer to FIG. 7B.

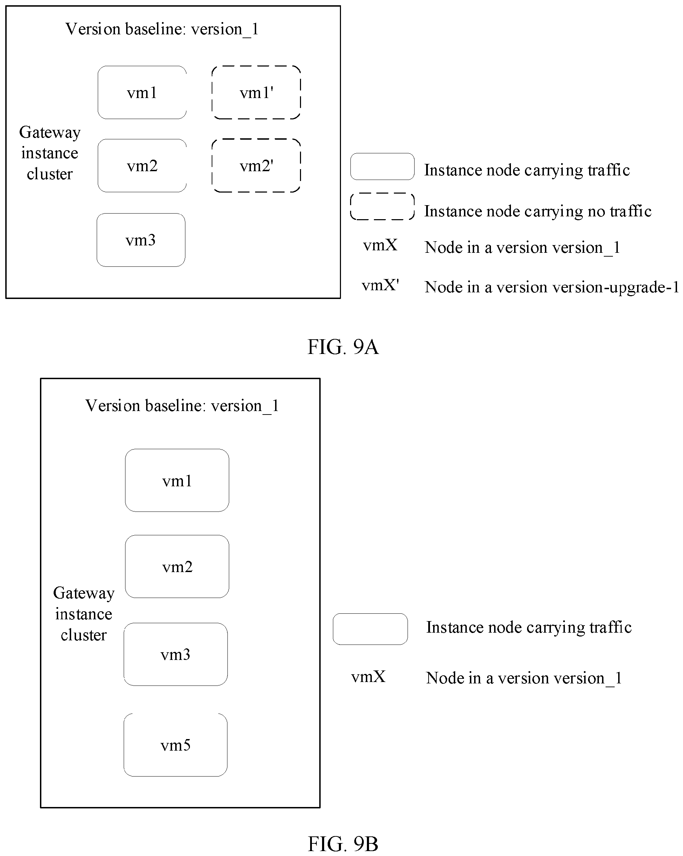

Step 2: Enter the rollback procedure.
A. Count all virtual machines to be rolled back, namely, virtual machines in the target version (version-upgrade-1), and prepare for rollback (because the virtual machines in the historical version are not deleted, only a virtual machine corresponding to the historical version needs to be found and a health status of the virtual machine needs to be ensured). In other words, vm1' finds vm1 in the historical version (version_1), and vm2' prepares vm2 in the historical version (version_1). vm3 is a virtual machine in the historical version (version_1) and is not upgraded. Therefore, rollback does not need to be performed. In other words, the virtual machines to be rolled back are vm1' and vm2'.
B. Roll back the virtual machine in the batch (1) based on the batch policy (the batch policy can be reset in the rollback phase). Specifically, health status check is first performed on a target virtual machine vm1 (a heartbeat is reported by using an internal agent of the virtual machine), and rollback is performed on a premise that a health status of the target virtual machine is normal. Then, traffic of vm1' in the batch (1) is diverted back to vm1 in the historical version, and then an offline operation is performed on traffic of vm1' in the target version (version-upgrade-1). It should be understood that the rollback process is the same as the upgrade process. For details, refer to the detailed description in the upgrade process. Details are not described herein again.
C. Traffic gray verification in the batch (1) After virtual machine upgrade is completed in the batch (1), gray verification can be performed on traffic reachability related to a gateway instance, to ensure that traffic of the service cluster is normal, that is, traffic of the target version is normal.
D. Perform upgrade in the batch (2) based on the batch policy. The rollback process is the same as that in the batch (1). Only one difference is that a rollback object is changed to vm2' in the batch (2). For details, refer to the detailed description in the foregoing embodiment. Details are not described herein again.
E. The scale-out occurs in an execution process of this step. For example, vm5 is added to the service cluster in the scale-out. The version baseline for the scale-out and scale-in of the current gateway instance cluster is the historical version (version_1). Therefore, the virtual machine (vm5) in the historical version is directly added in the scale-out. For example, after the rollback phase is completed, for the current status of the gateway instance cluster, refer to FIG. 9A.

In this embodiment of this application, regardless of a phase of the upgrade deployment procedure or the rollback phase, the scale-out and scale-in operations may be performed on the service cluster, and a cluster capability change immediately takes effect, so that high availability of the service cluster can be ensured.

Step 3: Clear the virtual machines in the target version (version-upgrade-1).

After the rollback phase is completed, all virtual machines in the target version (version-upgrade-1) to be rolled back are upgraded, and the virtual machine newly added in the scale-out is in the historical version (version_1). In this case, all the virtual machines in the target version (version-upgrade-1) are cleared, to release resources. For example, for the status of the gateway instance cluster, refer to FIG. 9B.

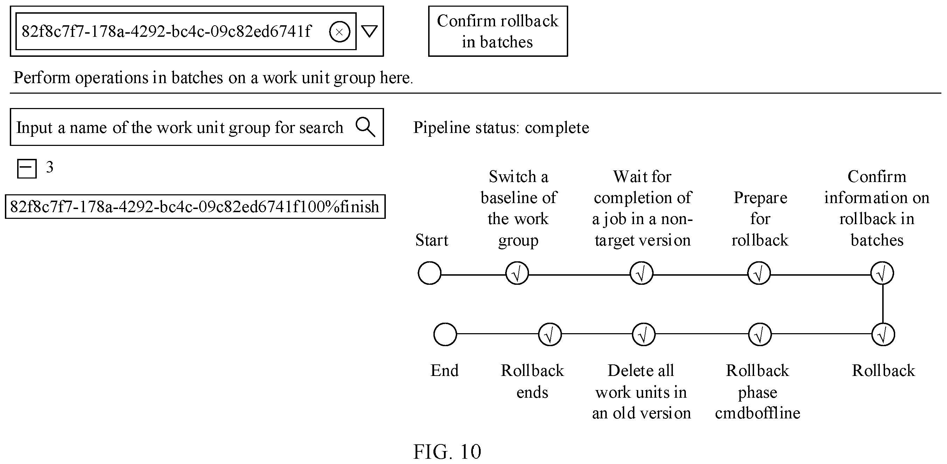

In a possible implementation, the pipeline in the rollback deployment phase may be displayed on the upgrade page. For example, as shown in FIG. 10, when each step on the pipeline is completed or fails, corresponding prompt information is displayed. For example, if execution is completed, a tick V is displayed; if execution fails, an error × is displayed.

According to the solution in this embodiment of this application, in the entire upgrade deployment procedure, any invocation information of the service cluster does not change, change is performed on a same service cluster, and all external invocation does not need to be additionally adapted, so that availability of the service cluster can be ensured. In addition, operation and maintenance personnel do not need to be aware of this, and user experience can be improved.

In some other embodiments, the upgrade procedure in this application may also be used in a scenario in which image upgrade is performed on an application hosting service cluster. Specifically, an upgrade procedure of the application hosting service cluster includes the following steps: A user deploys one application (for example, one image, ajar package, or a tar package) on an application hosting service console page, and sets a required capability. A platform automatically selects an appropriate quantity of virtual machines/containers to deploy applications of the user. After application services go online for service for a time period, versions of the applications need to be upgraded. The user only needs to upload an image package to be updated and select an upgrade deployment manner (namely, multi-phase rolling upgrade) to trigger upgrade. Then, the upgrade procedure is automatically executed. In addition, the service cluster can automatically perform scale-out and scale-in operations based on traffic of the service cluster in an upgrade process.

The application service may be accessed by using an original internet protocol (internet protocol, IP) address and a port number, an original domain name, or the like. An access manner of the application service does not change with an upgrade deployment procedure. In addition, an automatic version for scale-out and scale-in of the service cluster is controlled by the upgrade procedure, and a computing node or an operation and maintenance personnel does not need to be aware of the version.

In other words, the solution in this embodiment of this application may be applied to a gateway service, or an application hosting service.

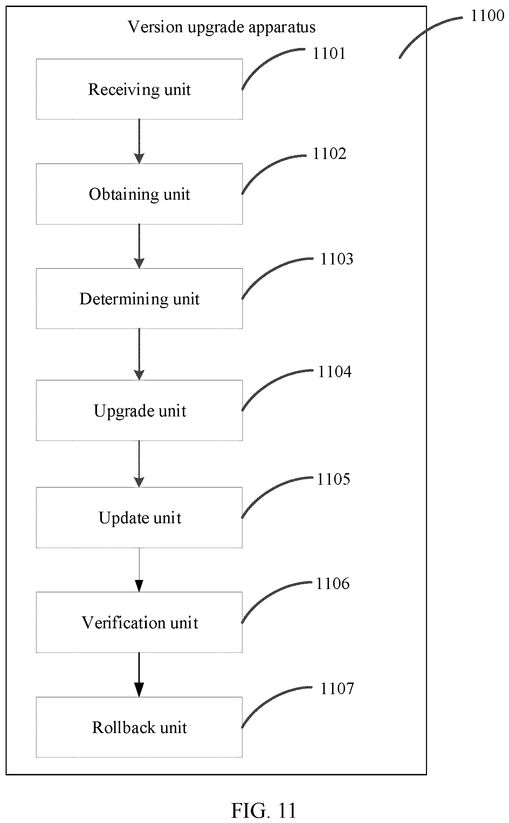

Based on the foregoing embodiments, this application further provides a version upgrade apparatus. Refer to FIG. 11. The version upgrade apparatus 1100 may include: a receiving unit 1101, an obtaining unit 1102, a determining unit 1103, and an upgrade unit 1104.

The receiving unit 1101 is configured to receive an upgrade request message sent by a client, where the upgrade request message includes an identifier of a service cluster and an identifier of a target version. The obtaining unit 1102 is configured to obtain a version baseline of the service cluster based on the identifier of the service cluster, where the version baseline of the service cluster indicates a software version running on a node added to the current service cluster in scale-out. The determining unit 1103 is configured to: add a first node to the service cluster in the scale-out, and determine, based on the version baseline of the service cluster, a software version running on the first node. The upgrade unit 1104 is configured to: when it is determined that the software version running on the first node is different from the target version, upgrade the first node, so that a software version running on an upgraded first node is the target version.

In a possible implementation, the upgrade unit 1104 is specifically configured to upgrade the first node in the following manner:
creating the upgraded first node for the first node; and switching traffic on the first node to the upgraded first node.

In a possible implementation, the upgrade unit 1104 is further configured to: after the upgrade request message sent by the client is received, upgrade a second node in the first service cluster, so that a software version running on an upgraded second node is the target version, where the second node is a node included in the service cluster before the scale-out.

In a possible implementation, the apparatus further includes an update unit 1105, configured to: when it is determined that a node upgrade rate of the service cluster reaches a preset indicator, update the version baseline of the service cluster, so that the version baseline of the service cluster indicates that a software version running on a node added to the current service cluster in the scale-out is the target version.

In a possible implementation, the upgrade request message further includes an upgrade manner, the upgrade manner indicates to upgrade nodes in the service cluster in a plurality of batches, and the nodes in the first service cluster include the first node and the second node.

In a possible implementation, the apparatus further includes: a verification unit 1106, configured to: before the version baseline of the service cluster is updated, complete gray verification of software on an upgraded node in at least one batch.

In a possible implementation, the receiving unit 1101 is further configured to: after the first node is upgraded, receive a rollback request message sent by the client, where the rollback request message includes the identifier of the service cluster and an identifier of a historical version.

The apparatus further includes a rollback unit 1107, configured to roll back the upgraded first node, so that a software version running on the rolled back first node is the historical version, where the historical version is the software version running on the first node when the first node is added in the scale-out.

In a possible implementation, the rollback unit 1107 is specifically configured to roll back the upgraded first node in the following manner:
switching traffic on the upgraded first node to the first node.

In a possible implementation, the preset indicator is set by a user

In this embodiment of this application, division into modules is an example, and is merely a logical function division. In an actual implementation, another division manner may be used. In addition, functional modules in embodiments of this application may be integrated into one processor, each of the modules may exist alone physically, or two or more modules are integrated into one module. The integrated module may be implemented in a form of hardware, or may be implemented in a form of a software functional module.

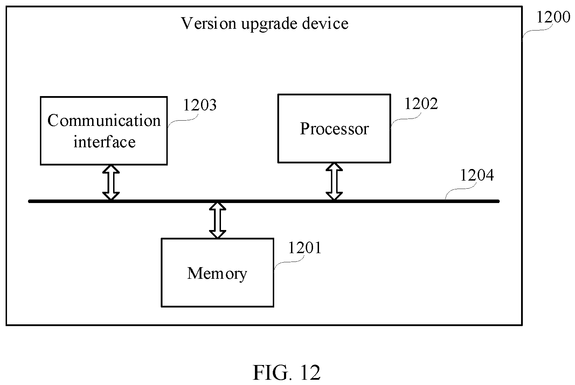

FIG. 12 shows a version upgrade device 1200 according to an embodiment of this application. The device may be a server, or one or more devices in the server. The version upgrade device 1200 includes at least one processor 1202, configured to implement or support the version upgrade device 1200 in implementing functions of the obtaining unit 1102, the determining unit 1103, the upgrade unit 1104, the update unit 1105, the verification unit 1106, and the rollback unit 1107 that are shown in FIG. 11 in an embodiment of this application. For example, the processor 1202 may obtain a version baseline of the service cluster based on the identifier of the service cluster, where the version baseline of the service cluster indicates a software version running on a node that is added to the current service cluster in scale-out; add a first node to the service cluster in the scale-out, and determine, based on the version baseline of the service cluster, a software version running on the first node; and when it is determined that the software version running on the first node is different from the target version, upgrade the first node, so that a software version running on an upgraded first node is the target version. For details, refer to the detailed descriptions in the method examples. Details are not described herein again.

The version upgrade device 1200 may further include at least one memory 1201, configured to store program instructions. The memory 1201 is coupled to the processor 1202. The coupling in this embodiment of this application may be an indirect coupling or a communication connection between apparatuses, units, or modules in an electrical form, a mechanical form, or another form, and is used for information exchange between the apparatuses, the units, or the modules. The processor 1202 may operate with the memory 1201 together. The processor 1202 may execute the program instructions and/or data stored in the memory 1201. At least one of the at least one memory may be included in the processor.

The version upgrade device 1200 may further include a communication interface 1203, configured to communicate with another device by using a transmission medium. For example, the communication interface 1203 may implement a function of the receiving unit shown in FIG. 11 provided in an embodiment of this application. The processor 1202 may send and receive data through the communication interface 1203. For example, the communication interface 1203 may receive an upgrade request message sent by a client, where the upgrade request message includes an identifier of a service cluster and an identifier of a target version.

A specific connection medium between the communication interface 1203, the processor 1202, and the memory 1201 is not limited in this application. In this embodiment of this application, in FIG. 12, the memory 1201, the processor 1202, and the communication interface 1203 are connected by using a bus 1204. The bus is represented by using a bold line in FIG. 12. The bus may be classified into an address bus, a data bus, a control bus, and the like. For ease of representation, only one bold line is used in FIG. 12 to represent the bus. However, it does not indicate that there is only one bus or only one type of bus.

In embodiments of this application, the processor 1202 may be a general purpose processor, a digital signal processor, an application-specific integrated circuit, a field-programmable gate array or another programmable logic device, a discrete gate or transistor logic device, or a discrete hardware component, and may implement or perform the method, steps, and logical block diagrams disclosed in embodiments of this application. The general purpose processor may be a microprocessor or any conventional processor or the like. The steps of the method disclosed with reference to embodiments of this application may be directly performed through a hardware processor, or may be performed through a combination of hardware in the processor and a software module.

In this embodiment of this application, the memory 1201 may be a non-volatile memory like a hard disk drive (hard disk drive, HDD) or a solid-state drive (solid-state drive, SSD), or may be a volatile memory (volatile memory) like a RAM. The memory is any other medium that can carry or store expected program code in a form of an instruction or a data structure and that can be accessed by a computer, but is not limited thereto. The memory in this embodiment of this application may alternatively be a circuit or any other apparatus capable of implementing a storage function, and is configured to store the program instructions and/or the data.

Optionally, the computer-executable instructions in this embodiment of this application may also be referred to as application program code. This is not specifically limited in this embodiment of this application.

An embodiment of this application further provides a computer-readable storage medium, including instructions. When the instructions are run on a computer, the computer is enabled to perform the methods in the foregoing embodiments.

An embodiment of this application further provides a computer program product, including instructions. When the computer program product runs on a computer, the computer is enabled to perform the methods in the foregoing embodiments.

An embodiment of this application further provides a chip, and logic in the chip is configured to perform the methods in the foregoing embodiments.

Embodiments of this application are described with reference to the flowcharts and/or block diagrams of the method, the device (system), and the computer program product according to embodiments of this application. It should be understood that instructions may be used to implement each procedure and/or each block in the flowcharts and/or the block diagrams and a combination of a procedure and/or a block in the flowcharts and/or the block diagrams. These instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A version upgrade method, comprising:
receiving an upgrade request message sent by a client, wherein the upgrade request message comprises an identifier of a service cluster and an identifier of a target version;
obtaining a version baseline of the service cluster based on the identifier of the service cluster, wherein the version baseline of the service cluster indicates a software version running on a node added to the current service cluster in scale-out;
adding a first node to the service cluster in the scale-out, and determining, based on the version baseline of the service cluster, a software version running on the first node; and
when it is determined that the software version running on the first node is different from the target version, upgrading the first node, so that a software version running on an upgraded first node is the target version.

2. The method according to claim 1, wherein the upgrading the first node comprises:
creating the upgraded first node for the first node; and
switching traffic on the first node to the upgraded first node.

3. The method according to claim 1 or 2, wherein after the receiving an upgrade request message sent by a client, the method further comprises:
upgrading a second node in the first service cluster, so that a software version running on an upgraded second node is the target version, wherein the second node is a node comprised in the service cluster before the scale-out.

4. The method according to any one of claims 1 to 3, wherein the method further comprises:
when it is determined that a node upgrade rate of the service cluster reaches a preset indicator, updating the version baseline of the service cluster, so that the version baseline of the service cluster indicates that a software version running on a node added to the current service cluster in the scale-out is the target version.

5. The method according to any one of claims 1 to 4, wherein the upgrade request message further comprises an upgrade manner, the upgrade manner indicates to upgrade nodes in the service cluster in a plurality of batches, and the nodes in the first service cluster comprise the first node and the second node.

6. The method according to claim 4 or 5, wherein before the updating the version baseline of the service cluster, the method further comprises:
completing gray verification of software on an upgraded node in at least one batch.

7. The method according to any one of claims 1 to 6, wherein after the upgrading the first node, the method further comprises:
receiving a rollback request message sent by the client, wherein the rollback request message comprises the identifier of the service cluster and an identifier of a historical version; and
rolling back the upgraded first node, so that a software version running on the rolled back first node is the historical version, wherein the historical version is the software version running on the first node when the first node is added in the scale-out.

8. The method according to claim 7, wherein the rolling back the upgraded first node comprises:
switching traffic on the upgraded first node to the first node.

9. The method according to claim 4, wherein the preset indicator is set by a user

10. A version upgrade apparatus, comprising:
a receiving unit, configured to receive an upgrade request message sent by a client, wherein the upgrade request message comprises an identifier of a service cluster and an identifier of a target version;
an obtaining unit, configured to obtain a version baseline of the service cluster based on the identifier of the service cluster, wherein the version baseline of the service cluster indicates a software version running on a node added to the current service cluster in scale-out;
a determining unit, configured to: add a first node to the service cluster in the scale-out, and determine, based on the version baseline of the service cluster, a software version running on the first node; and
an upgrade unit, configured to: when it is determined that the software version running on the first node is different from the target version, upgrade the first node, so that a software version running on an upgraded first node is the target version.

11. The apparatus according to claim 10, wherein the upgrade unit is specifically configured to upgrade the first node in the following manner:
creating the upgraded first node for the first node; and
switching traffic on the first node to the upgraded first node.

12. The apparatus according to claim 10 or 11, wherein the upgrade unit is further configured to: after the upgrade request message sent by the client is received, upgrade a second node in the first service cluster, so that a software version running on an upgraded second node is the target version, wherein the second node is a node comprised in the service cluster before the scale-out.

13. The apparatus according to any one of claims 10 to 12, wherein the apparatus further comprises an update unit, configured to: when it is determined that a node upgrade rate of the service cluster reaches a preset indicator, update the version baseline of the service cluster, so that the version baseline of the service cluster indicates that a software version running on a node added to the current service cluster in the scale-out is the target version.

14. The apparatus according to any one of claims 10 to 13, wherein the upgrade request message further comprises an upgrade manner, the upgrade manner indicates to upgrade nodes in the service cluster in a plurality of batches, and the nodes in the first service cluster comprise the first node and the second node.

15. The apparatus according to claim 13 or 14, wherein the apparatus further comprises a verification unit, configured to: before the version baseline of the service cluster is updated, complete gray verification of software on an upgraded node in at least one batch.

16. The apparatus according to any one of claims 10 to 15, wherein the receiving unit is further configured to: after the first node is upgraded, receive a rollback request message sent by the client, wherein the rollback request message comprises the identifier of the first service cluster and an identifier of a historical version; and
the apparatus further comprises a rollback unit, configured to roll back the upgraded first node, so that a software version running on the rolled back first node is the historical version, wherein the historical version is the software version running on the first node when the first node is added in the scale-out.

17. The apparatus according to claim 16, wherein the rollback unit is specifically configured to roll back the upgraded first node in the following manner:
switching traffic on the upgraded first node to the first node.

18. The apparatus according to claim 13, wherein the preset indicator is set by a user

19. A version upgrade device, comprising a memory and a processor, wherein
the memory is configured to store computer instructions; and
the processor is configured to execute the computer instructions stored in the memory, to enable the device to perform the method according to any one of claims 1 to 9.

20. A computer-readable storage medium, wherein the storage medium stores computer instructions, and when the computer instructions are executed by a computer, the computer is enabled to perform the method according to any one of claims 1 to 9.

21. A computer program product, wherein the computer program product comprises computer instructions; and when the computer instructions are executed by a computer, the computer is enabled to perform the method according to any one of claims 1 to 9.
